# EUROPÄISCHE PATENTSCHRIFT

(11) **EP 3 210 228 B1**
(45) Veröffentlichungstag und Bekanntmachung des Hinweises auf die Patenterteilung: **31.10.2018**
(21) Anmeldenummer: 15801774.9
(22) Anmeldetag: 26.11.2015
(51) Int. Cl.: H01H 19/635, H01H 3/42, H01H 19/02, H01H 19/36, H01H 19/00

(54) **DREHBETÄTIGER**
ROTARY ACTUATOR
ACTIONNEUR ROTATIF

(30) Priorität: 19.12.2014 DE 102014226618
(43) Veröffentlichungstag der Anmeldung: 30.08.2017
(73) Patentinhaber: Siemens Aktiengesellschaft, 80333 München (DE)
(72) Erfinder: FAURIE, Jean Jacques, 90409 Nürnberg (DE)
(86) Internationale Anmeldenummer: PCT/EP2015/077724
(87) Internationale Veröffentlichungsnummer: WO 2016/096360

(56) Entgegenhaltungen:
- EP-A1- 2 811 500
- EP-A2- 1 109 181
- WO-A1-2006/041468
- DE-A1- 2 337 135

## Beschreibung

Die Erfindung betrifft einen Drehbetätiger mit einem zylindrischen Grundkörper und einer Betätigungshandhabe, die auf den zylindrischen Grundkörper aufgesetzt ist und eine Anzeigefläche aufweist.

Das Dokument EP2811500 offenbart einen Drehbetätiger gemäß dem Oberbegriff des Anspruchs 1.

Derartige Drehbetätiger werden zur Befehlseingabe an so genannten Maschinen/Mensch-Schnittstellen regelmäßig verwendet. Dabei ist nicht nur eine Verwendung zur Schaltung von Steuerströmen, sondern auch für Leistungsschaltungen denkbar, indem der Drehbetätiger als Auslöser für Leistungsschalter eingesetzt wird. An diese Drehbetätiger werden hohe Anforderungen bezüglich Lebensdauer, Robustheit, Abdichtung des elektrischen Teiles gegen Wasser und Schmutz gestellt. Außerdem soll die Herstellbarkeit möglichst kostengünstig und prozesssicher sein.

Diese Befehlsgeräte werden in Schalttafeln, Bedientableaus, Schaltschranktüren oder Gehäusedeckel montiert. Befehlsgeräte sind in der Regel modular aufgebaut. Das bedeutet, sie bestehen aus einem Betätiger, einem Befestigungsteil, wie zum Beispiel einer Ringmutter oder einem Montagehalter und einem oder mehreren Schaltelementen, die als Öffner- oder Schließerschaltglieder ausgeführt sind. Zur Montage wird der Betätiger in der Regel von vorn durch ein Loch in der Schalttafel geführt und von hinten mittels eines Befestigungsteils montiert. Die Schaltelemente werden mit Schrauben, Schnapphaken oder Riegeln mechanisch am Betätiger oder am Befestigungsteil befestigt. Die elektrische Verbindung der Schaltelemente mit der Steuerung erfolgt über Anschlussklemmen.

Insbesondere bei Drehbetätigern kann ein Problem darin bestehen, dass die mechanische Übertragungskette der Drehbetätigung ausgehend von der Betätigungshandhabe gestört ist und dadurch nicht die definierte Raststellung und damit Schaltstellung, sondern aufgrund einer fehlerhaften mechanischen Übertragung nur eine Zwischenstellung erreicht wird, die nicht dem gewünschten Schaltstellungszustand entspricht.

Demgemäß besteht die Aufgabe der vorliegenden Erfindung darin, einen Drehbetätiger zu schaffen, der eine zuverlässige Schaltstellungsübertragung über eine lange Lebensdauer ermöglicht.

Diese Aufgabe wird durch einen Drehbetätiger mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch einen Drehbetätiger gelöst mit einem zylindrischen Grundkörper und einer Betätigungshandhabe, die auf den zylindrischen Grundkörper aufgesetzt ist und eine Anzeigefläche aufweist. Die Erfindung zeichnet sich dabei dadurch aus, dass im zylindrischen Grundkörper ein Einlegeboden angeordnet ist, wobei der Einlegeboden Konturen aufweist, welche in Konturen einer Krone greifen, und wobei der Einlegeboden und die Krone auf einem Führungselement geführt sind.

Der Kern der Erfindung besteht darin, dass die mechanische Übertragungskette ausgehend von der Betätigungshandhabe durch Verwendung eines Führungselementes, insbesondere eines Lichtleiters optimiert wurde, wobei das Führungselement gleichzeitig als Führung für den Einlegeboden und die Krone dient, die die Schaltstellungsänderung in eine definierte Rastposition gewährleisten. Um die unterschiedlichen Schaltstellungen umzusetzen, sind sowohl am Einlegeboden als auch an der Krone Konturen ausgebildet, die im nicht betätigten Zustand ineinander greifen. Die Konturen können beispielsweise in Form von Vorsprüngen und Ausnehmungen ausgebildet sein. Im betätigten Zustand verschiebt sich dann die Krone um 45° zum Einlegeboden, der durch Rasthaken positionsstabil im zylindrischen Grundkörper des Drehbetätigers gehalten wird. In dieser Stellung greifen die Konturen des Einlegebodens und der Krone nicht mehr ineinander, sondern sind um 45° versetzt zueinander angeordnet. Die Krone wird während der Betätigung der Betätigungshandhabe durch das Führungselement, insbesondere den Lichtleiter geführt, welches zwischen Einlegeboden und Anzeigefläche in der Betätigungshandhabe ausgebildet ist und an der Betätigungshandhabe fixiert ist. Im Betätigungsfall nimmt das Führungselement die Krone mit, die somit durch das Führungselement geführt wird.

In einer speziellen Ausgestaltung der Erfindung kann es vorgesehen sein, dass das Führungselement ein Lichtleiter ist. In dieser besonderen Ausführungsform ist das Führungselement in vorteilhafterweise funktionsoptimiert ausgestaltet.

In einer Fortführung dieses erfindungsgemäßen Konzepts kann es vorgesehen sein, dass die ineinandergreifenden Konturen des Einlegebodens und der Krone derart ausgebildet sind, dass unterschiedliche Verraststellungen und somit unterschiedliche Schaltstellungen der Betätigungshandhabe umzusetzen sind. Dabei zeichnet sich die erste Raststellung im unbetätigten Zustand dadurch aus, dass die Konturen, die am Einlegeboden und an der Krone ausgebildet sind, ineinandergreifen, beispielsweise indem sie als Ausnehmungen und Vorsprünge ausgebildet sind. In der zweiten Raststellung im betätigten Zustand sind die Konturen am Einlegeboden und an der Krone um 45° versetzt zueinander angeordnet und greifen somit nicht mehr ineinander.

In einer speziellen Ausgestaltung der Erfindung kann ein weiteres Konzept darin bestehen, dass zwischen Krone und Führungselement ein Federelement angeordnet ist. Dabei ist das Führungselement durch das Federelement geführt. Das Federelement ist zwischen Krone und Betätigungshandhabe ausgebildet und ermöglicht die Rückstellung der Betätigungshandhabe.

In einer besonders vorteilhaften Ausgestaltung der Erfindung kann es vorgesehen sein, dass das Führungselement zwischen Einlegeboden und Anzeigefläche ausgebildet ist. Die Ausbildung des Führungselementes bis zur Anzeigefläche ermöglicht, dass die Drehbetätigung direkt auf das Führungselement übertragen wird.

In einer speziellen Ausgestaltung der Erfindung kann ein weiteres Konzept darin bestehen, dass das Führungselement an der Betätigungshandhabe fixiert ist. Die Fixierung des Führungselementes an der Betätigungshandhabe ermöglicht eine direkte Bewegungsübertragung von der Betätigungshandhabe auf die Krone, die dadurch eine definierte Raststellung einnehmen kann.

In einer Fortführung dieses erfindungsgemäßen Konzepts kann es vorgesehen sein, dass der Einlegeboden und die Krone jeweils einen zylindrischen Grundkörper aufweisen. Die zylindrischen Grundformen von Einlegeboden und Krone führen dazu, dass diese auch durch die Innenwand des zylindrischen Grundkörpers des Drehbetätigers geführt werden.

In einer speziellen Ausgestaltung der Erfindung kann ein weiteres Konzept darin bestehen, dass am Einlegeboden Rasthaken ausgebildet sind, die eine positionsstabile Ausrichtung im zylindrischen Grundkörper des Drehbetätigers gewährleisten. Dabei ist vorgesehen, dass sich die Rasthaken in Konturen an der Innenfläche des zylindrischen Grundkörpers des Drehbetätigers verhaken, so dass der Einlegeboden bei Betätigung der Handhabe immer positionsstabil gegenüber der Krone gelagert ist.

In einer speziellen Ausgestaltung der Erfindung kann ein weiteres Konzept darin bestehen, dass im Fall einer Betätigung mit Verrastung der Betätigungshandhabe die Krone und das Führungselement eine um 45° versetzte Position zum positionsstabilen Einlegeboden einnehmen. Diese um 45° zueinander versetzte Stellung entspricht der zweiten Schaltstellung.
Der erfindungsgemäße Drehbetätiger weist einen zylindrischen Grundkörper mit einer Betätigungshandhabe auf, die auf den zylindrischen Grundkörper aufgesetzt ist und eine vorzugsweise beleuchtbare Anzeigefläche aufweist. Die Betätigungshandhabe ist dabei drehbar im zylindrischen Grundkörper des Drehbetätigers gelagert. Im zylindrischen Grundkörper des Drehbetätigers ist ein Einlegeboden positioniert, der durch Rasthaken in entsprechende Konturen der Innenfläche des zylindrischen Grundkörpers des Drehbetätigers greift und dadurch positionsstabil verbaut ist. Der Einlegeboden greift mit seinen Konturen in entsprechende Konturen einer Krone. Zwischen Einlegeboden und Betätigungshandhabe ist ein Führungselement, insbesondere ein Lichtleiter angeordnet, welches durch die vorzugsweise zylindrisch ausgebildete Krone geführt ist. Zwischen Krone und Führungselement ist ein Federelement angeordnet, welches die Rückstellung der Betätigungshandhabe ermöglicht. Das Führungselement, vorzugsweise der Lichtleiter ist an der Betätigungshandhabe fixiert und nimmt im Betätigungsfall die Krone mit, so dass die Krone inklusive des Führungselementes in eine um 45° zum Einlegeboden versetzte Position wechselt. In dieser Schaltstellung greifen die Konturen am Einlegeboden nicht mehr in die entsprechenden Konturen der Krone.

Der erfindungsgemäße Drehbetätiger zeichnet sich dadurch aus, dass die mechanische Übertragungskette ausgehend von der Betätigungshandhabe durch Verwendung eines Führungselementes, insbesondere eines Lichtleiters optimiert wurde, wobei das Führungselement gleichzeitig als Führung für den Einlegeboden und die Krone dient, die die Schaltstellungsänderung in eine definierte Rastposition gewährleisten. Undefinierte Zwischenstellungen werden dadurch vermieden. Durch das geringe Spiel zwischen den Bauteilen ergibt sich eine höhere Robustheit und eine damit verbundene längere Lebensdauer des Drehbetätigers. Zudem wird durch die kompakte und stabile Funktionseinheit aus Einlegeboden, Krone und Führungselement ein besseres Schaltgefühl erreicht.

Weitere Vorteile und Ausführungen der Erfindung werden nachfolgend anhand eines Ausführungsbeispiels sowie anhand der Zeichnung erläutert.

Dabei zeigen schematisch:
Fig. 1 in einer Schnittdarstellung ein Ausführungsbeispiel eines erfindungsgemäßen Drehbetätigers;
Fig. 2 in einer perspektivischen Darstellung die Funktionseinheit aus Betätigungshandhabe, Einlegeboden, Krone und Führungselement des Drehbetätigers im nicht betätigten Zustand;
Fig. 3 in einer perspektivischen Darstellung die Funktionseinheit aus Betätigungshandhabe, Einlegeboden, Krone und Führungselement des Drehbetätigers im betätigten Zustand.

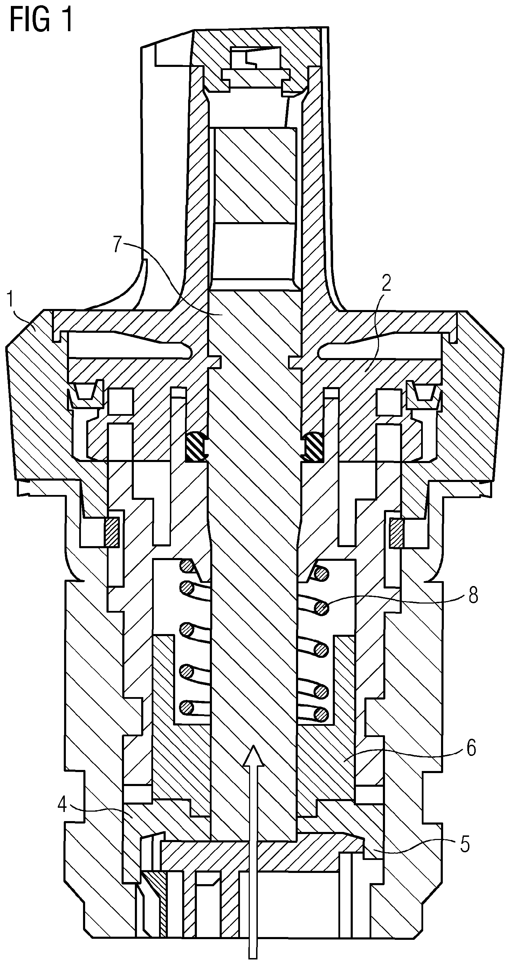

Fig. 1 zeigt einen erfindungsgemäßen Drehbetätiger mit einem zylindrischen Grundkörper 1 und einer Betätigungshandhabe 2, die auf den zylindrischen Grundkörper 1 aufgesetzt ist und eine vorzugsweise beleuchtbare Anzeigefläche aufweist. Die Betätigungshandhabe 2 ist dabei drehbar im zylindrischen Grundkörper 1 des Drehbetätigers gelagert. Im zylindrischen Grundkörper 1 des Drehbetätigers ist ein Einlegeboden 4 positioniert, der durch Rasthaken 5 in entsprechende Konturen der Innenfläche des zylindrischen Grundkörpers 1 des Drehbetätigers greift und dadurch positionsstabil verbaut ist. Der Einlegeboden 4 greift mit seinen Konturen in entsprechende Konturen einer Krone 6. Zwischen Einlegeboden 4 und Betätigungshandhabe 2 ist ein Führungselement 7, insbesondere ein Lichtleiter angeordnet, der durch die vorzugsweise zylindrisch ausgebildete Krone 6 geführt ist. Zwischen Krone 6 und Führungselement 7 ist ein Federelement 8 angeordnet, welches die Rückstellung der Betätigungshandhabe 2 ermöglicht. Der Führungselement 7, vorzugsweise der Lichtleiter ist an der Betätigungshandhabe 2 fixiert und nimmt im Betätigungsfall die Krone 6 mit, so dass die Krone 6 inklusive des Führungselementes 7 in eine um 45° zum Einlegeboden 4 versetzte Position wechselt. In dieser Schaltstellung greifen die Konturen am Einlegeboden 4 nicht mehr in die entsprechenden Konturen der Krone 6.

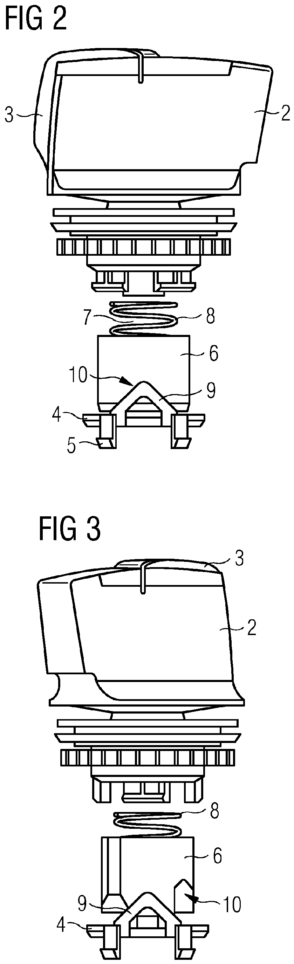

In Fig. 2 ist die Funktionseinheit aus Betätigungshandhabe 2, Einlegeboden 4, Krone 6 und Führungselement 7 des Drehbetätigers mit vorzugsweise beleuchtbarer Anzeige 3 im nicht betätigten Zustand dargestellt. Im nicht betätigten Zustand greifen die Konturen 9 des Einlegebodens 4, die beispielsweise als Vorsprung ausgebildet sein können, in die Konturen 10 der Krone 6, die dementsprechend als Ausnehmungen ausgebildet sein können. Es ist jedoch auch denkbar, dass die Konturen 10 an der Krone 6 als Vorsprünge ausgebildet sind und die entsprechenden Konturen 9 am Einlegeboden 4 als Ausnehmungen.

Fig. 3 zeigt die Funktionseinheit aus Betätigungshandhabe 2, Einlegeboden 4, Krone 6 und Führungselement 7 des Drehbetätigers im betätigten Zustand. In dieser Schaltstellung greifen die Konturen 9 des Einlegebodens 4, die beispielsweise als Vorsprung ausgebildet sein können, nicht in die Konturen 10 der Krone 6, die dementsprechend als Ausnehmungen ausgebildet sind. Die Krone 6 ist nun inklusive des Führungselement 7 in dieser Schaltstellung um 45° zum Einlegeboden 4 versetzt angeordnet.

Der erfindungsgemäße Drehbetätiger zeichnet sich dadurch aus, dass die mechanische Übertragungskette ausgehend von der Betätigungshandhabe durch Verwendung eines Führungselementes, insbesondere eines Lichtleiters optimiert wurde, wobei das Führungselement gleichzeitig als Führung für den Einlegeboden und die Krone dient, die die Schaltstellungsänderung in eine definierte Rastposition gewährleisten. Undefinierte Zwischenstellungen werden dadurch vermieden. Durch das geringe Spiel zwischen den Bauteilen ergibt sich eine höhere Robustheit und eine damit verbundene längere Lebensdauer des Drehbetätigers. Zudem wird durch die kompakte und stabile Funktionseinheit aus Einlegeboden, Krone und Führungselement ein besseres Schaltgefühl erreicht.

### Bezugszeichenliste

- 1: Grundkörper
- 2: Betätigungshandhabe
- 3: Anzeigefläche
- 4: Einlegeboden
- 5: Rasthaken
- 6: Krone
- 7: Führungselement
- 8: Federelement
- 9: Kontur
- 10: Kontur

## Patentansprüche

1. Drehbetätiger mit einem zylindrischen Grundkörper (1) und einer Betätigungshandhabe (2), die auf den zylindrischen Grundkörper (1) aufgesetzt ist und eine Anzeigefläche (3) aufweist, **dadurch gekennzeichnet, dass** im zylindrischen Grundkörper (1) ein Einlegeboden (4) angeordnet ist, wobei der Einlegeboden (4) Konturen (9) aufweist, welche in Konturen (10) einer Krone (6) greifen, und wobei der Einlegeboden (4) und die Krone (6) auf einem Führungselement (7) geführt sind.

2. Drehbetätiger nach Anspruch 1, **dadurch gekennzeichnet, dass** das Führungselement (7) ein Lichtleiter ist.

3. Drehbetätiger nach Anspruch 1 oder 2, **dadurch gekennzeichnet, dass** die ineinander greifenden Konturen (9, 10) des Einlegebodens (4) und der Krone (6) derart ausgebildet sind, dass unterschiedliche Verraststellungen und somit unterschiedliche Schaltstellungen der Betätigungshandhabe (2) umzusetzen sind.

4. Drehbetätiger nach einem der Ansprüche 1 bis 3, **dadurch gekennzeichnet, dass** zwischen Krone (6) und Führungselement (7) ein Federelement (8) angeordnet ist.

5. Drehbetätiger nach einem der Ansprüche 1 bis 4, **dadurch gekennzeichnet, dass** das Führungselement (7) zwischen Einlegeboden (4) und Anzeigefläche (3) ausgebildet ist.

6. Drehbetätiger nach einem der Ansprüche 1 bis 5, **dadurch gekennzeichnet, dass** das Führungselement (7) an der Betätigungshandhabe (2) fixiert ist.

7. Drehbetätiger nach einem der Ansprüche 1 bis 6, **dadurch gekennzeichnet, dass** der Einlegeboden (4) und die Krone (6) jeweils einen zylindrischen Grundkörper (1) aufweisen.

8. Drehbetätiger nach einem der Ansprüche 1 bis 6, **dadurch gekennzeichnet, dass** am Einlegeboden (4) Rasthaken (5) ausgebildet sind, die eine positionsstabile Ausrichtung im zylindrischen Grundkörper (1) des Drehbetätigers gewährleisten.

9. Drehbetätiger nach einem der Ansprüche 1 bis 8, **dadurch gekennzeichnet, dass** im Fall einer Betätigung mit Verrastung der Betätigungshandhabe (2) die Krone (6) und das Führungselement (7) eine um 45° versetzte Position zum positionsstabilen Einlegeboden (4) einnehmen.

## Claims

1. Rotary actuator having a cylindrical main body (1) and an actuating handle (2) which is fitted onto the cylindrical main body (1) and has a display area (3), **characterized in that** an inserted base (4) is arranged in the cylindrical main body (1), wherein the inserted base (4) has contours (9) which engage in contours (10) of a crown (6), and wherein the inserted base (4) and the crown (6) are guided on a guide element (7).

2. Rotary actuator according to Claim 1, **characterized in that** the guide element (7) is a lightguide.

3. Rotary actuator according to Claim 1 or 2, **characterized in that** the contours (9, 10) of the inserted base (4) and of the crown (6) which engage one in the other are embodied in such a way that different latching positions and therefore different switching positions of the actuating handle (2) can be implemented.

4. Rotary actuator according to one of Claims 1 to 3, **characterized in that** a spring element (8) is arranged between the crown (6) and the guide element (7).

5. Rotary actuator according to one of Claims 1 to 4, **characterized in that** the guide element (7) is formed between the inserted base (4) and display area (3).

6. Rotary actuator according to one of Claims 1 to 5, **characterized in that** the guide element (7) is secured to the actuating handle (2).

7. Rotary actuator according to one of Claims 1 to 6, **characterized in that** the inserted base (4) and the crown (6) each have a cylindrical main body (1).

8. Rotary actuator according to one of Claims 1 to 6, **characterized in that** latching hooks (5) are formed on the inserted base (4) and ensure a positionally stable orientation in the cylindrical main body (1) of the rotary actuator.

9. Rotary actuator according to one of Claims 1 to 8, **characterized in that** in the event of actuation with latching of the actuating handle (2) the crown (6) and the guide element (7) assume a position with respect to the positionally stable inserted base (4) which is offset by 45°.

## Revendications

1. Actionneur rotatif pourvu d'un corps de base (1) cylindrique et d'une poignée d'actionnement (2) qui est posée sur le corps de base (1) cylindrique et possède une surface d'indication (3), **caractérisé en ce qu'**un fond d'insertion (4) est disposé dans le corps de base (1) cylindrique, dans lequel le fond d'insertion (4) présente des contours (9) qui se mettent en prise dans des contours (10) d'une couronne (6), et dans lequel le fond d'insertion (4) et la couronne (6) sont guidés sur un élément de guidage (7).

2. Actionneur rotatif selon la revendication 1, **caractérisé en ce que** l'élément de guidage (7) est un guide de lumière.

3. Actionneur rotatif selon la revendication 1 ou 2, **caractérisé en ce que** les contours (9, 10) du fond d'insertion (4) et de la couronne (6) qui se mettent en prise les uns dans les autres sont réalisés de façon qu'il soit possible de changer entre différentes positions d'enclenchement, et donc différentes positions de commutation de la poignée d'actionnement (2).

4. Actionneur rotatif selon l'une des revendications 1 à 3, **caractérisé en ce qu'**un élément élastique (8) est disposé entre la couronne (6) et l'élément de guidage (7).

5. Actionneur rotatif selon l'une des revendications 1 à 4, **caractérisé en ce que** l'élément de guidage (7) est réalisé entre le fond d'insertion (4) et la surface d'indication (3).

6. Actionneur rotatif selon l'une des revendications 1 à 5, **caractérisé en ce que** l'élément de guidage (7) est fixé sur la poignée d'actionnement (2).

7. Actionneur rotatif selon l'une des revendications 1 à 6, **caractérisé en ce que** le fond d'insertion (4) et la couronne (6) comprennent à chaque fois un corps de base (1) cylindrique.

8. Actionneur rotatif selon l'une des revendications 1 à 6, **caractérisé en ce que** des crochets de verrouillage (5) sont formés sur le fond d'insertion (4), lesquels crochets garantissent un alignement dans une position stable dans le corps de base (1) cylindrique de l'actionneur rotatif.

9. Actionneur rotatif selon l'une des revendications 1 à 8, **caractérisé en ce que**, dans le cas d'un actionnement avec enclenchement de la poignée d'actionnement (2), la couronne (6) et l'élément de guidage (7) prennent une position décalée de 45° par rapport au fond d'insertion (4) en position
